# EUROPÄISCHE PATENTSCHRIFT

(11) **EP 0 634 334 B1**
(45) Veröffentlichungstag und Bekanntmachung des Hinweises auf die Patenterteilung: **24.09.1997**
(21) Anmeldenummer: 94110375.6
(22) Anmeldetag: 04.07.1994
(51) Int. Cl.: B65D 6/06, B65D 25/22

(54) **Lagerbehälter mit Führungselementen**
Storage container with guiding elements
Récipient de stockage avec éléments de guidage

(30) Priorität: 16.07.1993 DE 9310689 U
(43) Veröffentlichungstag der Anmeldung: 18.01.1995
(73) Patentinhaber: SIEMENS AKTIENGESELLSCHAFT, 80333 München (DE)
(72) Erfinder: Lederer, Jürgen, Dipl.-Ing. (FH), D-91244 Reichenschwand (DE)

(56) Entgegenhaltungen:
- DE-A- 3 940 550
- DE-U- 9 202 414
- US-A- 4 950 039

## Beschreibung

Die Erfindung betrifft einen Lagerbehälter, auch Ladungsträger oder Tablar genannt, zur Aufnahme von Lager und/oder Transportgut, welches zusammen mit dem Ladungsträger in Regallagersystemen eingelagert wird.

Mittels dieser Lagerbehälter kann das darin befindliche Gut rationell auf Transportanlagen, Forderstrecken oder dergleichen gehandhabt werden.

Bei vollautomatischen Lagersystemen werden zur Verbringung der Lagerbehälter in die Regalfächer automatische Handhabungsvorrichtungen, sogenannte Regalbediengeräte verwendet, die jedes beliebige Regalfach anfahren können und die über einen Greif- und Betätigungsmechanismus verfügen, mit dem die Lagerbehälter in das jeweilige Regalfach geschoben bzw. aus diesem herausgezogen werden können. Ein dafür geeigneter Lagerbehälter ist beispielsweise aus dem DE-U-92 02 414. bekannt. Dieser ist im wesentlichen aus einem ebenen Blechzuschnitt durch Anbringen von längs- und quergerichteten Abkantungen gebildet und weist eine rechteckige Grundform auf, wobei an den Stirnseiten des Lagerbehälters jeweils ein Greifbereich für eine Handhabungsvorrichtung vorgesehen ist.

Unabhängig davon, ob ein solcher Lagerbehälter manuell von einer Bedienperson oder automatisch durch ein Regalbediengerät in das Regalfach eingebracht werden soll, kann es vorkommen, daß der Lagerbehälter nicht optimal bezüglich des Regalfaches ausgerichtet ist und sich beim Einschieben im Regalfach verkantet. Eine Bedienperson kann in einem solchen Fall in der Regel zwar rasch durch Ausrichten des Lagerbehälters Abhilfe schaffen, muß aber dem Einlagervorgang besondere Aufmerksamkeit schenken, was zu einem Zeitverlust führt. Wird die Einlagerung automatisch durch ein Regalbediengerät vorgenommen, so müssen an die Positioniergenauigkeit des Regalbediengerätes hohe Anforderungen gestellt werden, und selbst wenn diese erfüllt sind, kann es bei großen Regalsystemen zu statischen Abweichungen und damit zu einer außermittigen Positionierung des Lagerbehälters vor dem Regalfach kommen.

Es ist daher Aufgabe der Erfindung, einen Lagerbehälter konstruktiv so auszugestalten, daß er relativ problemlos in ein Regalfach eingeschoben werden kann.

Diese Aufgabe wird durch einen Lagerbehälter gelöst, bei dem an beiden Seiten Verbreiterungen als Führungselemente angebracht sind, die sich in Ein- bzw. Auslagerrichtung über mindestens einen Teilbereich der Seitenwände erstrecken und zu mindestens einer Stirnseite des Lagerbehälters hin, eine Verjüngung aufweisen.

Durch diese Ausgestaltung des Lagerbehälters ergibt sich ein weiterer Vorteil, der darin besteht, daß die seitlichen Fachfreimaße zwischen Tablar und Regal durch die Zentrierwirkung kleiner bemessen werden können. Durch die damit erzielte bessere Raumnutzung können die Regale kürzer ausgeführt werden, so daß weniger Material benötigt wird.

Die durch die Führungselemente bedingte, selbstzentrierende Wirkung des Lagerbehälters kann verstärkt werden, wenn die seitlichen Begrenzungen des Regalfachs, die beispielsweise aus jeweils seitlich angebrachten Winkelschienen zur Aufnahme des Lagerbehälters bestehen können, an der Vorderseite ein nach außen abgewinkeltes Element in der Höhe der Führungselemente aufweisen. Ein solches Element kann bei Winkelschienen dadurch gebildet werden, daß beidseitig die senkrechten Schenkel der Schiene über eine vorgegebene Länge von den waagrechten Schenkeln getrennt und bezüglich des Regalfaches nach außen abgebogen bzw. abgewinkelt werden.

Die Ausbildung der Führungselemente kann in vorteilhafter Weise dadurch erfolgen, daß bei der Herstellung des Lagerbehälters aus einem Blechteil, bei den Seitenwänden entsprechend mehr Material vorgesehen wird, so daß das zusätzlich vorhandene Material durch Umbördelung zu Führungselementen geformt werden kann. Dabei wird durch die Umbördelung gleichzeitig die Steifigkeit des Lagerbehälters erhöht.

Ein Ausführungsbeispiel der Erfindung ist im folgenden anhand der Zeichnung beschrieben. Dabei zeigen:
- FIG 1: eine Draufsicht auf einen Lagerbehälter,
- FIG 2: eine perspektivische Darstellung eines Lagerbehälters,
- FIG 3: eine Draufsicht auf ein Regalfach,
- FIG 4: die Einlagerung eines Lagerbehälters in ein Regalfach,
- FIG 5: die Einlagerung eines Lagerbehälters in ein Regalfach mit Einlaufschrägen,
- FIG 6: einen Lagerbehälter im Regalfach,
- FIG 7: die Vorderansicht eines beladenen Regalbehälters im Regalfach,
- FIG 8: die Vorderansicht eines beladenen Lagerbehälters nach dem Stand der Technik in einem Regalfach,
- FIG 9 und 10: Fachbodenregale mit Lagerbehältern.

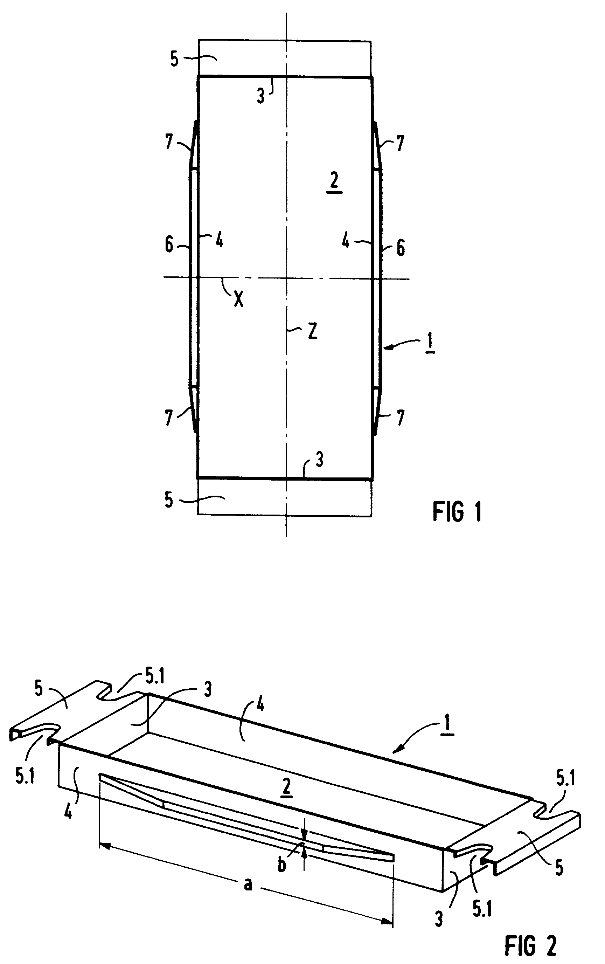

FIG 1 zeigt die Draufsicht auf einen Lagerbehälter 1, der aus einer rechteckigen Grundform 2 mit stirnseitigen Wänden 3 und Seitenwänden 4 besteht. An den Stirnwänden 3 sind Greifbereiche 5 angebracht (schematisch dargestellt), die zur manuellen oder automatischen Handhabung besonders ausgebildet sein können. An den Außenseiten der Seitenwände 4 des Lagerbehälters 1 sind Führungselemente 6 angebracht, die sich an beiden Enden in den Abschnitten 7 zu den Seitenwänden 4 hin verjüngen.

FIG 2 zeigt eine perspektivische Darstellung eines Lagerbehälters 1 mit im wesentlichen den gleichen Elementen wie der aus FIG 1 bekannte Lagerbehälter. Die Greifbereiche 5, die an den Stirnwänden 3 des Lagerbehälters angebracht sind weisen seitliche Einkerbungen 5.1 auf, in die ein Greifmechanismus eines Regelbediengerätes (beispielsweise ein Zangenmechanismus mit senkrecht stehenden Bolzen) zur automatischen Handhabung des Lagerbehälters eingreifen kann. Das Führungselement 6 weist in diesem Ausführungsbeispiel gemäß FIG 2 eine Breite b auf, die je nach Bedarf vom Fachmann unterschiedlich projektiert werden kann. Ebenso kann die Länge a des Führungselementes 6 sich lediglich über einen Teilbereich der Gesamtlänge der Seitenwände 4 erstrecken (wie in FIG 2 dargestellt) oder er kann auch über die gesamte Länge ausgeführt werden, wobei natürlich auch die Länge der Abschnitte 7, die sich zu den Seitenwänden 4 hin verjüngen variabel ist und den Anforderungen entsprechend modifiziert werden kann.

Die Erfindung beschränkt sich jedoch nicht auf die in FIG 2 gezeigte Form des Lagerbehälters. Dieser könnte auch wannen- oder kastenförmig ausgebildet sein.

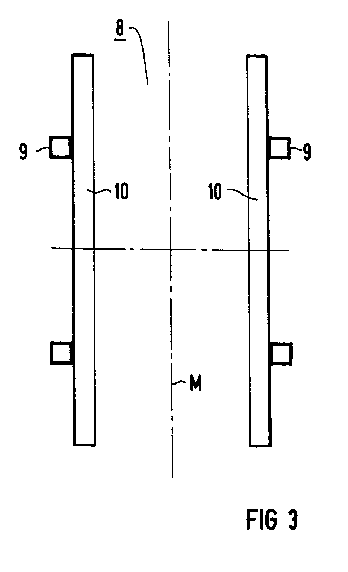

FIG 3 zeigt die Draufsicht auf ein Regalfach 8 zur Aufnahme eines Lagerbehälters. Es besteht aus jeweils zwei Winkelschienen 10, die an sogenannten Stehern 9 befestigt sind. In Lagersystemen sind in der Regel eine Vielzahl solcher einzelner Regalfächer übereinander und nebeneinander angeordnet. Symmetrisch zu den Winkelschienen 10 ist die Mittellinie M eingezeichnet, die sich in der Ebene der waagrechten Schenkel der Winkelschienen 10 befindet.

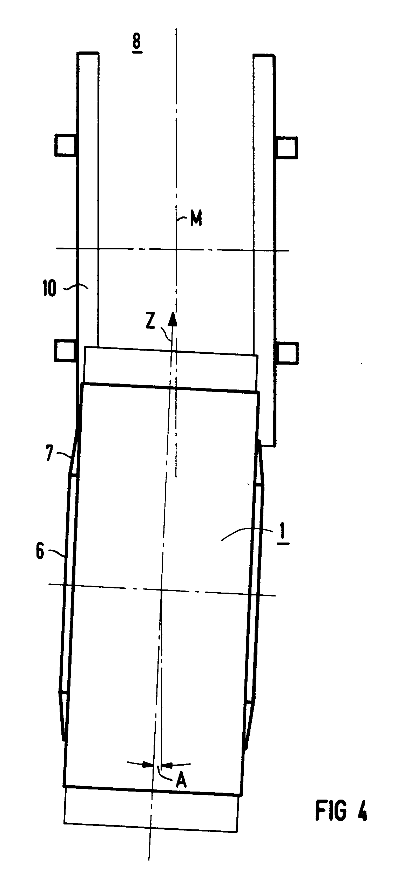

FIG 4 zeigt einen Einlagervorgang eines Lagerbehälters 1, der in das Regalfach 8 eingelagert werden soll. Wie zu erkennen ist, ist die Symmetrieachse Z des Lagerbehälters, in der die Einlagerbewegung erfolgt, gegenüber der Mittelachse M des Regalfachs sowohl parallel versetzt als auch um einen Winkel A verdreht. Beim Einschieben des Lagerbehälters gelangt der Verjüngungsbereich 7 des linken Führungselements 6 an die vordere senkrechte Kante der linken Winkelschiene 10, so daß der Lagerbehälter im Verlauf der weiteren Vorschubbewegung in Z-Richtung nach rechts verschoben wird bis die Achse Z mit der Mittelachse in Deckung gebracht ist oder jedenfalls, wenn ein Toleranzbereich zwischen der Breite des Lagerbehälters 1 inklusive der Führungselemente 6 und der Breite des Regelfaches 10 vorgesehen ist, parallel zu der Mittelachse zu liegen kommt, wobei der maximale Abstand zwischen den beiden Achsen nicht größer ist als der maximal vorgesehene Toleranzbereich

Durch die Führungselemente 6 mit ihren Verjüngungen 7 erfährt der Lagerbehälter also beim Einlagern eine selbstzentrierende Wirkung die ihm im wesentlichen mittig zur Einlagerung im Regalfach kommen läßt.

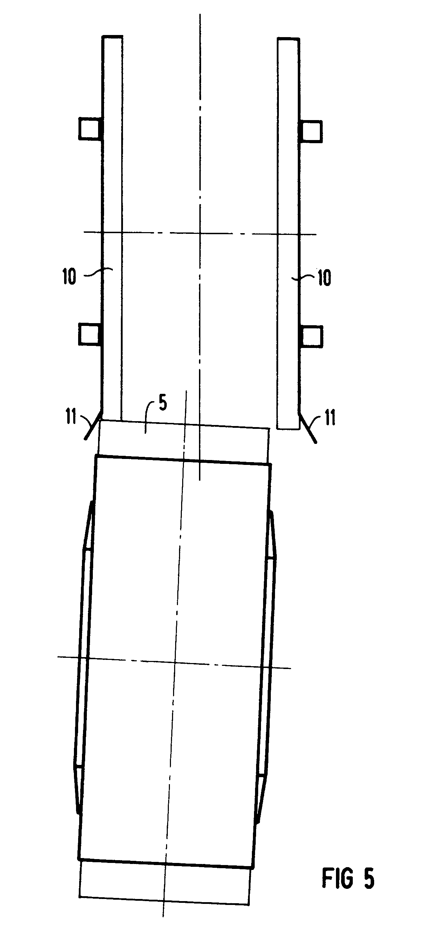

Nach der Ausbildung gemäß FIG 5 wird die Zentrierung und die Einlagerung des Lagerbehälters weiter vereinfacht. Im Unterschied zur FIG 4 weisen nämlich die Winkelschienen 10 senkrecht stehende Einlaufschrägen 11 auf. Damit wird ein Fangbereich geschaffen, der breiter ist als das Regalfach selbst. Dadurch kann auch ein Lagerbehälter 1, dessen Parallelversatz bezüglich des Regalfaches 8 so groß ist, daß eine seiner Außenkanten (wie hier die linke Außenkante des Greifbereiches 5) über die linke senkrechte Kante der Winkelschiene 10 hinaussteht, noch sicher in das Regalfach geschoben werden.

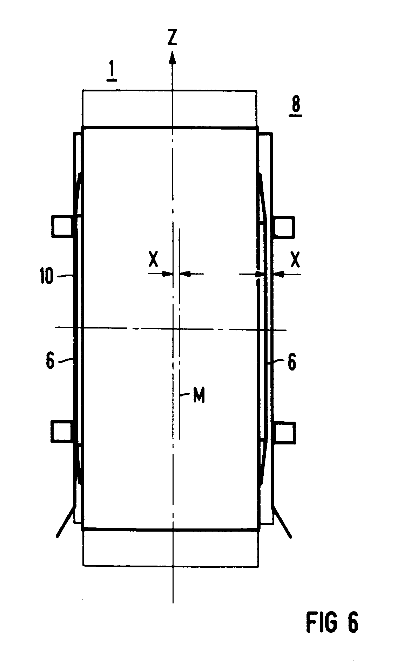

FIG 6 zeigt einen vollständig in einem Regalfach 8 befindlichen Lagerbehälter 1, dessen linkes Führungselement 6 an der linken winkelschiene 10 anliegt. Wie zu erkennen ist, hat die Zentrierwirkung der Führungselemente 6 dazu geführt, daß der Lagerbehälter nur noch minimal, d.h. um die Breite X, die das Regalfach breiter ist, als der Lagerbehälter mit den Führungselementen 6, außermittig liegt.

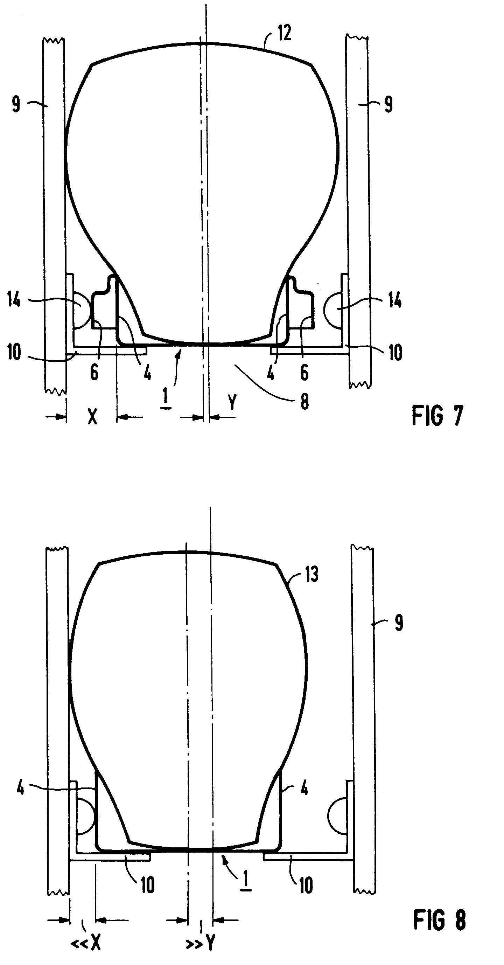

FIG 7 zeigt die Vorderansicht auf ein Regalfach 8 mit den Stehern 9 und den Winkelschienen 10, die mittels Befestigungselementen 14 an den Stehern 9 befestigt sind. Im Regalfach 8 ist ein Lagerbehälter 1 eingelagert. - Wie zu erkennen ist, sind die Führungselemente 6 des Lagerbehälters in dieser Ausführungsform durch Umbördelung der Seitenwände 4 entstanden. Diese Maßnahme führt gleichzeitig zu einer Erhöhung der Stabilität des Lagerbehälters. - Im Lagerbehälter 1 befindet sich ein Karton 12, der durch vielfache Handhabung ausgebeult wurde, d.h. bereits eine gewisse Balligkeit aufweist.

FIG 8 zeigt einen Lagerbehälter nach dem Stand der Technik, der in ein Regalfach mit denselben Abmessungen eingelagert ist. Durch die fehlenden Führungselemente ist der Lagerbehälter 1, dessen Ladefläche die gleiche Breite wie die des Lagerbehälters aus FIG 7 aufweist, sehr viel stärker außermittig gelagert. Wie zu erkennen ist, darf der Karton 13 in FIG 8 durch die fehlende Zentrierung nur eine sehr viel geringere Balligkeit aufweisen, als der Karton 12 in FIG 7.

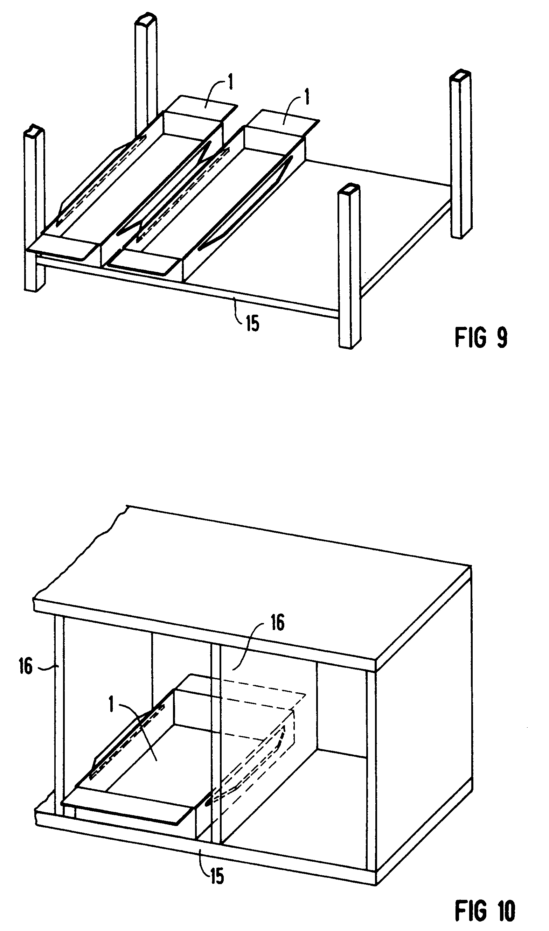

Wie in den Figuren 9 und 10 gezeigt, ist die Lagerung der Tablare bzw. Ladungsträger auch in konstruktiv anders gestalteten Regalanlagen möglich. Die Figuren 9 und 10 zeigen Ausführungsformen von Fachbodenregalanlagen 15, wobei in FIG 9 auf einen Fachboden 15 mehrere Lagerbehälter 1 - die hier nur schematisch als Rechtecke dargestellt sind - nebeneinander abgestellt werden können. Die Zentrierwirkung stellt sich dabei nicht durch die Berührung der Führungselemente mit den Seitenwänden des Regals oder mit Winkelschienen ein, sondern auch an den benachbarten, bereits im Fachbodenregal platzierten Lagerbehältern 1. In FIG 10 ist ein solches Fachbodenregal mit Zwischenwänden 16 versehen. Hier erfolgt die Zentrierwirkung entsprechend wie in den beschriebenen Regalanlagen mit Winkelschienen.

## Patentansprüche

1. Lagerbehälter (1) mit an beiden Seiten (4) angebrachten Verbreiterungen als Führungselemente (6) die sich in Ein- bzw. Auslagerrichtung (2) über mindestens einen Teilbereich der Seitenwände (4) erstrecken und zu mindestens einer Stirnseite (3) des Lagerbehälters (1) hin eine Verjüngung (7) aufweisen.

2. Lagerbehälter (1) nach Anspruch 1, wobei die Seitenwände (4) und die Führungselemente (6) aus einem Abschnitt des Lagerbehälters (1) geformt sind.

3. Regalfach (8) für einen Lagerbehälter (1) nach Anspruch 1 oder 2 mit seitlich angebrachten Regalfachbegrenzungen (10) zur Aufnahme des Lagerbehälters (1), wobei die Regalfachbegrenzungen (10) an der Vorderseite des Regalfaches ein nach außen abgewinkeltes Element (11) in der Höhe der Führungselemente aufweisen.

## Claims

1. Storage container (1) having extensions fitted to both sides (4) as guide elements (6), which extensions extend over at least a partial region of the side walls (4) in the direction (2) of the depositing or withdrawal of stores and have a tapered region (7) towards at least a front end (3) of the storage container (1).

2. Storage container (1) according to claim 1, wherein the side walls (4) and the guide elements (6) are formed from a section of the storage container (1).

3. Rack bay (8) for a storage container (1) according to claim 1 or 2, having rack bay limits (10) for receiving the storage container (1), wherein the rack bay limits (10) at the front end of the rack bay have an outwardly bent element (11) at the level of the guide elements.

## Revendications

1. Bac (1) de stockage comportant des deux côtés (4) des élargissements en tant qu'éléments de guidage (6) qui, dans le sens du stockage ou du déstockage (2), s'étendent au moins sur une partie des parois latérales (4), et qui comportent un rétrécissement (7) en direction d'au moins une face frontale (3) du bac (1) de stockage.

2. Bac (1) de stockage suivant la revendication 1, selon lequel les parois latérales (4) et les éléments de guidage (6) sont formés par une partie du bac (1) de stockage.

3. Casier (8) de rayonnage destiné à un bac (1) de stockage suivant la revendication 1 ou 2, comportant des délimitations (10) latérales de casier de rayonnage pour la réception du bac (1) de stockage, les délimitations (10) latérales du casier de rayonnage comportant, sur la face avant du casier de rayonnage, au niveau des éléments de guidage, un élément (11) coudé vers l'extérieur .
